Europäisches Patentamt

European Patent Office

Office européen des brevets

(19)

(11) **EP 1 146 630 B1**

(12) **EUROPÄISCHE PATENTSCHRIFT**

(45) Veröffentlichungstag und Bekanntmachung des Hinweises auf die Patenterteilung:
**12.10.2005 Patentblatt 2005/41**

(51) Int Cl.[7]: **H02M 3/28**, H02M 3/335

(21) Anmeldenummer: **01106543.0**

(22) Anmeldetag: **15.03.2001**

(54) **Verfahren zur Regulierung des Ausgangsstroms und/oder der Ausgangsspannung eines Schaltnetzteils**

Method for regulating the output current and/or the output voltage of a switched mode power supply

Procédé de regulation du courant de sortie et/ou tension de sortie d'un circuit d'alimentation à decoupage

(84) Benannte Vertragsstaaten:
**AT BE CH CY DE DK ES FI FR GB GR IE IT LI LU MC NL PT SE TR**

(30) Priorität: **12.04.2000 DE 10018229**
**04.12.2000 DE 10060344**

(43) Veröffentlichungstag der Anmeldung:
**17.10.2001 Patentblatt 2001/42**

(73) Patentinhaber: **FRIWO Gerätebau GmbH**
**48346 Ostbevern (DE)**

(72) Erfinder: **Schröder gen. Berghegger, Ralf, Dipl.-Ing.**
**49219 Glandorf (DE)**

(74) Vertreter: **Ackmann, Günther et al**
**Ackmann, Menges & Demski, Patentanwälte**
**Tonhallenstrasse 16**
**47051 Duisburg (DE)**

(56) Entgegenhaltungen:
**EP-A- 0 657 987        DE-A- 19 502 042**
**DE-A- 19 711 771**

- **PATENT ABSTRACTS OF JAPAN vol. 017, no. 440 (E-1414), 13. August 1993 (1993-08-13) & JP 05 091753 A (KOUFU NIPPON DENKI KK), 9. April 1993 (1993-04-09)**
- **PATENT ABSTRACTS OF JAPAN vol. 1997, no. 05, 30. Mai 1997 (1997-05-30) & JP 09 019143 A (YOKOGAWA ELECTRIC CORP), 17. Januar 1997 (1997-01-17)**
- **PATENT ABSTRACTS OF JAPAN vol. 016, no. 421 (P-1414), 4. September 1992 (1992-09-04) & JP 04 141711 A (TOHOKU RICOH CO LTD;OTHERS: 01), 15. Mai 1992 (1992-05-15)**

**Beschreibung**

Die Erfindung betrifft ein Verfahren zur Regelung des Ausgangsstromes und/oder der Ausgangsspannung eines primär getakteten Schaltnetzteils mit einem Transformator und einem Spannungsregler, in welchem durch die über eine Verbindung einer Wicklung des Transformators mit dem Eingang des Spannungsreglers entnommene Spannung die im Transformator gespeicherte Energie gemessen und die Spannungsbeaufschlagungszeit des Primärkreises des Transformators in einem Regelzyklus in Abhängigkeit eines Vergleiches des so ermittelten Messwertes der an der besagten Transformatorwicklung anliegenden Spannung mit einem internen Referenzwert des Spannungsreglers variiert wird.

Bei Schaltnetzteilen nach dem Flusswandlerprinzip und bei freischwingenden Sperrwandlern kann der Ausgangsstrom durch Begrenzung des Primärstromes im Transformator eingestellt werden. Dabei entsteht eine Strombegrenzung, die ein- und ausgangsspannungsabhängig und somit nicht für alle vorgesehen Anwendungsfälle einsetzbar ist. Die Ausgangsspannungsabhängigkeit kann durch geeignete Schaltungsdimensionierungen relativ klein gehalten werden, erfordert jedoch einen erhöhten Schaltungsaufwand und verursacht somit zusätzliche Kosten. Die Eingangsspannungsabhängigkeit entsteht durch die konstante Verzögerung der Abschaltung bei spannungsabhängig unterschiedlicher Steigung des Stromes und muss durch zusätzliche Beschaltung begrenzt werden, welche ebenfalls einen erhöhten Schaltungsaufwand erfordern und somit zusätzliche Kosten verursachen. Daneben sind Schaltnetzteile ohne Optokoppler bekannt, welche in der Regel eine schlechte Lastausregelung besitzen und somit zu einer hohen Ausgangsspannung bei geringem Ausgangsstrom und zu einer niedrigen Ausgangsspannung bei einem großen Ausgangsstrom führen.

Schaltnetzteile der gattungsgemäßen Art werden bevorzugt zur Spannungsversorgung von elektrischen oder elektronischen Geräten mit niedriger Versorgungsspannung eingesetzt und werden in großer Zahl benötigt, so dass eine möglichst kostengünstige Schaltungsanordnung gewählt werden muss, welche darüber hinaus die bestehenden Nachteile beseitigt.

In der Offenlegungsschrift DE 1971177A1 wird ein geregeltes Schaltnetzteil der gattungsgemäßen Art offenbart, wobei das dort gelehrte Schaltnetzteil eine Überlastsicherung aufweist, die es erlaubt, das Schaltnetzteil für kurze Zeit im Überlastbereich zu betreiben. Hierdurch wird erreicht, dass ein Schaltnetzteil dort eingesetzt werden kann, wo es zum weitgrößten Teil der Einsatzzeit im Nennlastbereich arbeitet, jedoch nur für kurze Impulse hohe Lasten zur Verfügung stellen muss. Hierdurch können gering dimensionierte elektronische Bauteile zum Aufbau gewählt werden, was zu einer Kosteneinsparung beim Aufbau des Schaltnetzteils führt.

Ausgehend von diesem Stand der Technik ist es Aufgabe der Erfindung, ein Verfahren sowie eine Schaltung aufzuzeigen, welche eine nahezu Last unabhängige Spannung - und/oder Stromregelung mit verhältnismäßig geringem Schaltungsaufwand ermöglicht. Der Betrieb im Überlastbetrieb gemäß der Offenlegungsschrift soll dabei nicht als Aufgabenstellung verfolgt werden.

Die Aufgabe der erfindungsgemäßen Aufgabe wird gelöst durch die Messung und Zwischenspeicherung der Spannung jeweils in einem festen zeitlichen Abstand nach Unterbrechung des Primärkreises durch Abschalten der Steuerleitung eines elektronischen Schalters, wenn die Spannungsschwingungen in den Wicklungen abgeklungen sind.

Dadurch ergibt sich der Vorteil, dass eine einfache und mit wenigen Bauelementen realisierte Regelung möglich ist. Durch die Verwendung eines schaltungsintern gebildeten Referenzwerts zur Beeinflussung des Spannungsreglers wird eine nahezu lastunabhängige Spannungsregelung mit wenigen Bauelementen ermöglicht. Beispielsweise besteht die Möglichkeit den Zeitpunkt zur Speicherung des Messwertes so festzulegen, dass zum Zeitpunkt der Speicherung der Strom im Wandler unabhängig von der sekundären Belastung ist. Hierdurch ergibt sich im Weiteren der Vorteil, dass bei geringer Belastung mit einer erheblich niedrigeren Taktfrequenz des Schaltnetzteils gearbeitet werden kann, wodurch eine sehr geringe Leerlaufeingangsleistung erzielt wird. Ferner kann bei derartigen Schaltungsanordnungen auf die Verwendung eines Optokopplers verzichtet werden, so dass erhebliche Kosten eingespart werden können.

In Ausgestaltung der Erfindung ist die Einstellung eines konstanten Tastverhältnisses des Sekundärstroms vorgesehen, wodurch der mittlere Ausgangsstrom proportional zum Primärpeakstrom wird. Hierdurch wird der Ausgangsstrom bei konstantem Abschaltstrom konstant. Um eine Einstellung des Tastverhältnisses zu ermöglichen wird vorgeschlagen, dass der elektronische Schalter für den Primärstrom durch den Spannungsregler über einen Vorwiderstand durch ein Ausgangssignal, welches gegenüber dem ursprünglichen Ausgangssignal verkürzt ist, angesteuert wird.

In Ausgestaltung der Erfindung ist im Weiteren vorgesehen, dass als Messwert die induzierte Spannung einer Hilfswicklung des Transformators verwendet wird oder dass ein Hochspannungs-IC für die Spannungsregelung eingesetzt wird und als Messwert die Spannung der Primärhauptwicklung des Transformators verwendet wird, wodurch die Möglichkeit besteht, ausgangsseitig eine Trennung von der Hochspannungsseite vorzunehmen und im Falle der Hilfswicklung kann in einer bevorzugten Ausführung ferner mit einem niedrigen Spannungspotential primärseitig gearbeitet werden, sodass eine Trennung zwischen der Hoch- und Niederspannungsseite bereits frühzeitig erfolgen kann. Darüber hinaus verursacht die Anfertigung derartiger Transformatoren nur geringe Zusatzkosten und führt zu einem erheblichen Kostenvorteil gegenüber herkömmlichen Schaltungsanordnungen. In weiterer Ausgestaltung ist hierbei vorgesehen, dass der Messwert zu einem festen, aber variabel einstellbaren Zeitpunkt nach Unterbrechung des Primärkreises zwischengespeichert wird.

In weiterer vorteilhafter Ausgestaltung der Erfindung ist vorgesehen, dass der Messwert mit einem internen Referenzwert des Spannungsreglers verglichen wird und in Abhängigkeit von der Höhe der Überschreitung durch den Messwert die Zeit zur erneuten Spannungsbeaufschlagung des Primärkreises bestimmt werden kann. Dadurch, dass die Höhe der Überschreitung schaltungstechnisch bei einer erneuten Spannungsbeaufschlagung des Primärkreises mit berücksichtigt wird, kann das Schaltverhalten des Schaltnetzteils in vorteilhafter Weise beeinflusst werden, so dass die Zykluszeit optimiert werden kann. In weiterer Ausgestaltung der Erfindung kann eine Optimierung dahingehend vorgenommen werden, dass eine erneute Spannungsbeaufschlagung des Primärkreises bis zum Erreichen eines maximalen Stroms des Transformators erfolgt. Durch diese Maßnahmen wird in Abhängigkeit von dem gespeicherten Messwert die Dauer der Ausschaltzeit des Leistungsschalters eingestellt, wobei die Ausschaltzeit um so größer ist, je höher die gespeicherte Spannung war. Nach Ablauf der Ausschaltzeit wird der Leistungsschalter so lange eingeschaltet bis der Strom durch den Transformator den voreingestellten Maximalwert erreicht und somit ein neuer Zyklus beginnt. Als Leistungsschalter wird üblicherweise ein Feldeffekttransistor verwendet, während hingegen die Speicherung durch beispielsweise ein sample and hold Element erfolgt.

In alternativer Ausgestaltung der Erfindung wird vorgeschlagen, dass der Strom des Transformators mit einem zeitabhängigen Referenzwert verglichen wird, wobei der Referenzwert gebildet wird durch

$$\text{Referenz } (t_{ein}) = \text{Abschaltwelle}/(1 + \text{Abschaltverzögerungszeit}/t_{ein})$$

(für $t_{ein}$ >minimale Einschaltzeit).

Durch den Vergleich des Referenzwertes mit dem Strom des Transformators kann somit ein Ausgleich der unterschiedlichen Stromanstiegsgeschwindigkeiten vorgenommen werden, so dass bei großer Anstiegsgeschwindigkeit der Abschaltvorgang eher eingeleitet wird und somit ein spannungsunabhängiger Abschaltpunkt vorliegt. Der besondere Vorteil der sich hieraus ergibt liegt darin, dass eine nahezu eingangsspannungsunabhängige Strombegrenzung ermöglicht wird, die ebenfalls in einem Niederspannungs-IC integriert werden kann, da keine Verbindung zum höheren Spannungspotential notwendig ist.

In weiterer Ausgestaltung der Erfindung wird zur Anwendung des vorstehend beschriebenen Verfahrens eine Schaltungsanordnung aufgezeigt, welche dadurch gekennzeichnet ist, dass der Spannungsregler zur Versorgung der Steuerschaltung als Linear- oder Schaltregler eingesetzt ist und dass eine Hilfswicklung des Transformators eine Messspannung für den Spannungsregler liefert und dass der Primärkreis einen elektronischen Schalter aufweist. Alternativ kann der Spannungsregler zur Versorgung der Steuerschaltung als Linear- oder Schaltregler eingesetzt werden, wobei der Spannungsregler ein Hochspannungs-IC ist und als Messspannung die Spannung der Primärhauptwicklung anliegt. In der Schaltung übernimmt der elektronische Schalter die Zu- oder Abschaltung der Spannungsbeaufschlagung für den Transformator und wird durch den Spannungsregler gegebenenfalls über einen Vorwiderstand angesteuert, wobei eine Ansteuerung ggf. über ein verkürztes Ausgangssignal erfolgt. Das Ausgangssignal wird soweit verkürzt, dass das Tastverhältnis des Sekundärstromes konstant wird. Dadurch wird der mittlere Ausgangsstrom proportional zum Primärpeakstrom. Bei konstantem Abschaltstrom ist demzufolge der Ausgangsstrom ebenfalls konstant.

Eine Hilfswicklung des Transformators liefert eine Messspannung, welche erfindungsgemäß zu einem festen, einstellbaren Zeitpunkt nach Unterbrechung des Primärkreises speicherbar ist, wodurch der bereits aufgeführte Vorteil einer nahezu Last unabhängigen Ausgangsspannung entsteht. Alternativ besteht die Möglichkeit, dass der Messwert der induzierten Spannung der Primärhauptwicklung zu einem festen, einstellbaren Zeitpunkt nach Unterbrechung des Primärkreises speicherbar ist. Eine erneute Spannungsbeaufschlagung des Primärkreises kann im weiteren in Abhängigkeit von der Höhe der Überschreitung des internen Referenzwertes des Spannungsreglers durch den Messwert erfolgen, so dass ein Einfluss auf die Zykluszeit und damit auf die Taktrate vorgenommen werden kann.

In weiterer Ausgestaltung der Erfindung ist schaltungstechnisch vorgesehen, dass der Primärkreis in Abhängigkeit der induzierten Spannung der Hilfswicklung oder der Primärhauptwicklung, vorzugsweise bei einem Wert < 0,1 Volt, wiedereinschaltbar ist.

In weiterer besonderer Ausgestaltung der Erfindung ist vorgesehen, dass die Ansteuerspannung für den elektronischen Schalter zusätzlich durch eine Spannung proportional zum Verhältnis

$$\frac{\text{Einschaltzeit} + \text{Ausschaltzeit}}{\text{Einschaltzeit}}$$

3

überlagert ist.

Alternativ besteht die Möglichkeit die Ansteuerspannung für den elektronischen Schalter zusätzlich durch eine Spannung des Gatesignals zu überlagern. Besonders vorteilhaft ist bei derartigen Schaltungsanordnungen, dass die primäre Versorgungsspannung des Spannungsreglers durch die gleichgerichtete, geregelte Primärspannung erfolgt und dass sekundärseitig kein hohes Spannungspotential anliegt. Durch diese Maßnahmen sind somit keine zusätzlichen Schutzanforderungen hinsichtlich des höheren Spannungspotentials, beispielsweise durch Optokoppler etc., sekundärseitig notwendig.

Die Erfindung wird im Weiteren an Hand von vier Schaltungsbeispielen erläutert.

Es zeigt

Fig. 1 einen Stromlaufplan eines ersten Schaltungsbeispiels eines Spannungsreglers mit Linearregler zur Versorgung des Steuerschaltkreises,

Fig. 2 ein Schaltungsbeispiel eines Spannungsreglers mit Schaltregler zur Versorgung des Steuerschaltkreises,

Fig. 3 einen Stromlaufplan eines Spannungsreglers mit Linearregler zur Versorgung des Steuerschaltkreises, wobei der Schalter über ein verkürztes Signal angesteuert wird und

Fig. 4 ein Stromlaufplan eines Spannungsregler mit Linearregler gemäß Figur 3, wobei als Messwert die Spannung der Primärhauptwicklung verwendet wird.

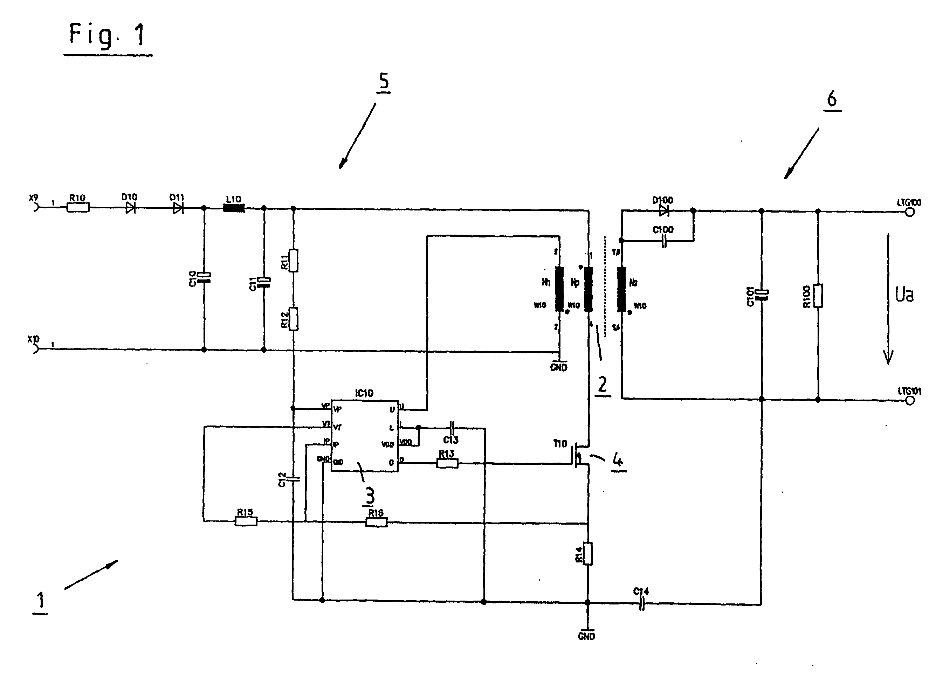

Figur 1 zeigt in einem ersten Ausführungsbeispiel einen Stromlaufplan eines Schaltnetzteils 1, welches einen Transformator 2, einen Spannungsregler 3 und einen elektronischer Schalter 4 sowie weitere Schaltungskomponenten aufweist. An den Eingängen X9, X10 erfolgt der Anschluss der Netzwechselspannung, während an den Ausgängen LTG100 und LTG101 die Ausgangsspannung Ua anliegt, und zwar an dem Ausgang LTG100 das Pluspotential. In den Primärkreis 5 des Transformators 2 ist ein Vorwiderstand R10, zwei Dioden D10, D11 sowie eine Spule L10 in Reihe geschaltet, während zwei Glättungskondensatoren C10, C11 parallel zu den Eingängen X9, X10 geschaltet sind und wobei der Kondensator C10 einerseits an der Kathode der Diode D11 bzw. mit der Induktivität L10 verbunden ist, während der zweite Pol mit dem Eingang X10 verbunden ist. Der zweite Kondensator C11 ist hingegen unmittelbar parallel zur Sekundärwicklung des Transformators 2 hinter der Induktivität L10 geschaltet.

Der Sekundärkreis 6 weist hingegen eine in Reihe geschaltete Diode D100 sowie einen hierzu parallel geschalteten Kondensator C100 auf. Ein Kondensator C101 mit einem parallel geschalteten Widerstand R100 ist einerseits mit dem Ausgang LTG100 und andererseits mit dem Ausgang LTG101 verbunden. An C11 liegt die gleichgerichtete Netzspannung an, während an C101 die gleichgerichtete Ausgangsspannung anliegt.

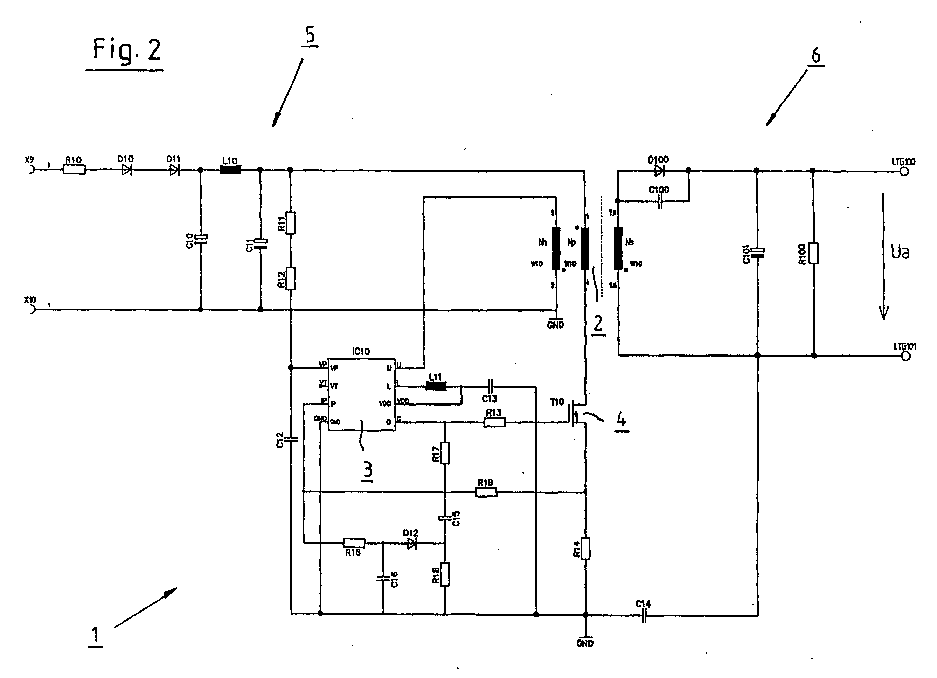

Über die Widerstände R11 und R12 erhält der integrierte Schaltkreis IC10 die Versorgungsspannung. Die Anschlüsse VT, GND, L und VDD dienen ebenfalls der Versorgung des integrierten Schaltkreises IC10 mit einer geregelten Betriebsspannung. Der integrierte Schaltkreis IC10 enthält im Weiteren einen Spannungsregler 3, der als Schaltregler gemäß Figur 1 oder als Linearregler gemäß Figur 2 geschaltet werden kann. Zum Betrieb als Linearregler sind die Ausgänge L und VDD miteinander verbunden, wie in Figur 1 gezeigt. Der Ausgang G des integrierten Schaltkreises IC10 ist über einen Vorwiderstand R13 mit dem elektronischen Schalter 4, einem Feldeffekttransistor T10 verbunden. Die Ausgänge L und VDD sind im Weiteren über einen Kondensator C13 mit dem Groundpotential verbunden, während der Eingang U mit der Hilfswicklung Nh verbunden ist. Der Eingang VT und IP ist über die Widerstände R15, R16 an den Ausgang des Feldeffekttransistors T10 angeschlossen, welcher wiederum über den Widerstand R14 mit dem Groundpotential verbunden ist. Zwischen dem Groundpotential des Regelteils und dem Ausgang LTG101 ist im Weiteren ein Kondensator C14 in Reihe geschaltet.

Figur 2 zeigt einen Stromlaufplan, in dem der integrierte Schaltkreis IC10 als Schaltregler eingesetzt ist. Gegenüber der vorgenannten Schaltung gemäß Figur 1 wurde eine Induktivität L11 an die Ausgänge L und VDD angeschlossen. Der Ausgang VDD und der zweite Anschluss der Induktivität L11 ist über einen Kondensator C13 mit dem Groundpotential verbunden, während der Eingang U mit der Hilfswicklung Nh verbunden ist. Der Eingang VT des integrierten Schaltkreises IC10 ist hingegen offen und der Eingang IP wird wie bisher über den Widerstand R16 mit dem Ausgang des Feldeffekttransistors T10 verbunden. Im Weiteren wird über einen Spannungsteiler das Ausgangssignal G zur Ansteuerung des Eingangs IP mit herangezogen, wobei das Ausgangssignal über einen Widerstand R17, einen Kondensator C15, eine Diode D12 und einen Widerstand R15 dem Eingang IP zugeleitet wird. Die Diode D12 ist kathodenseitig über den Widerstand R17 und Kondensator C15 mit dem Ausgang G verbunden.

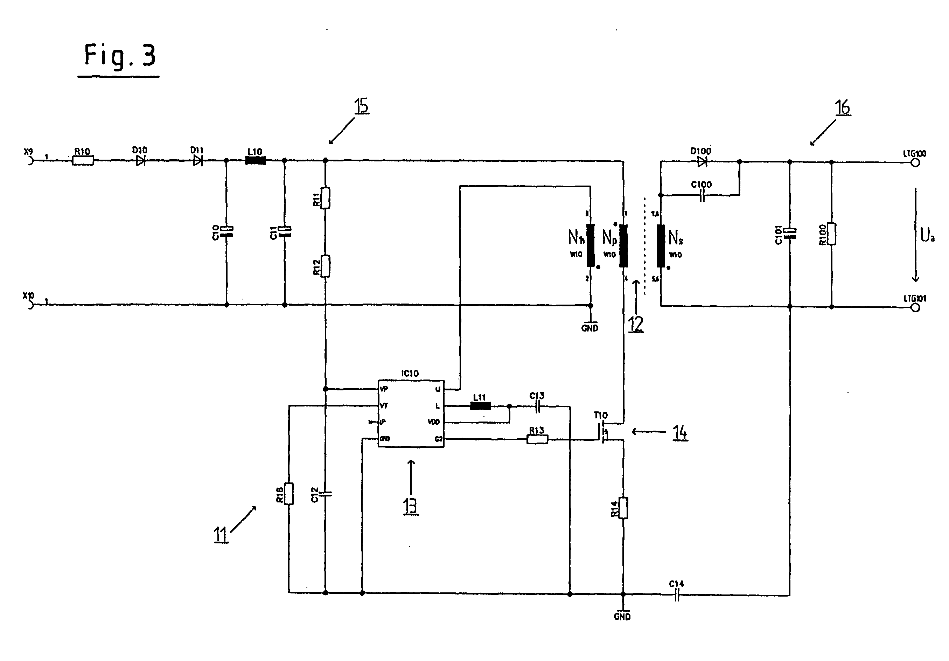

Figur 3 zeigt in einem weiteren Ausführungsbeispiel einen Stromlaufplan eines Schaltnetzteils 11, welches einen Transformator 12, einen Spannungsregler 13 und einen elektronischen Schalter 14 sowie weitere Schaltungskomponenten aufweist. An den Eingängen X9, X10 erfolgt der Anschluss der Netzwechselspannung, während an den Ausgängen LTG100 und LTG101 die Ausgangsspannung Ua anliegt, und zwar an dem Ausgang LTG100 das Pluspotential. In den Primärkreis 15 des Transformators 12 ist ein Vorwiderstand R10, zwei Dioden D10, D11 sowie eine Spule L10 in Reihe geschaltet, während zwei Glättungskondensatoren C10, C11 parallel zu den Eingängen X9, X10 geschaltet sind und wobei der Kondensator C10 einerseits an der Kathode der Diode D11 bzw. mit der Induktivität L10 verbunden ist, während der zweite Pol mit dem Eingang X10 verbunden ist. Der zweite Kondensator C11 ist hingegen unmittelbar parallel zur Sekundärwicklung des Transformators 12 hinter der Induktivität L10 geschaltet.

Der Sekundärkreis 16 weist hingegen eine in Reihe geschaltete Diode D100 sowie einen hierzu parallel geschalteten Kondensator C100 auf. Ein Kondensator C101 mit einem parallel geschalteten Widerstand R100 ist einerseits mit dem Ausgang LTG100 und andererseits mit dem Ausgang LTG101 verbunden. An C11 liegt die gleichgerichtete Netzspannung an, während an C101 die gleichgerichtete Ausgangsspannung anliegt.

Über die Widerstände R11 und R12 erhält der integrierte Schaltkreis IC10 die Versorgungsspannung. Die Anschlüsse GND, L und VDD dienen ebenfalls der Versorgung des integrierten Schaltkreises IC10 mit einer geregelten Betriebsspannung. Der integrierte Schaltkreis IC10 enthält im Weiteren einen Spannungsregler 13, der als Schaltregler geschaltet ist. An die Ausgänge L und VDD ist eine Induktivität L11 angeschlossen, wie aus Figur 2 bekannt. Der Ausgang G2 des integrierten Schaltkreises IC10 ist über einen Vorwiderstand R13 mit dem elektronischen Schalter 14, einem Feldeffekttransistor T10 verbunden. Der Ausgang VDD und der zweite Anschluss der Induktivität L11 ist über einen Kondensator C13 mit dem Groundpotential verbunden, während der Eingang U mit der Hilfswicklung Nh verbunden ist. Der Eingang Ip ist offen. Der Ausgang des Feldeffekttransistors T10 ist über den Widerstand R14 mit dem Groundpotential verbunden. Zwischen dem Groundpotential des Regelteils und dem Ausgang LTG101 ist im Weiteren ein Kondensator C14 in Reihe geschaltet. Der Eingang VT ist über einen Widerstand R18 mit Groundpotential verbunden. Eine weitere Beschaltung, wie in Figur 2 vorhanden, entfällt.

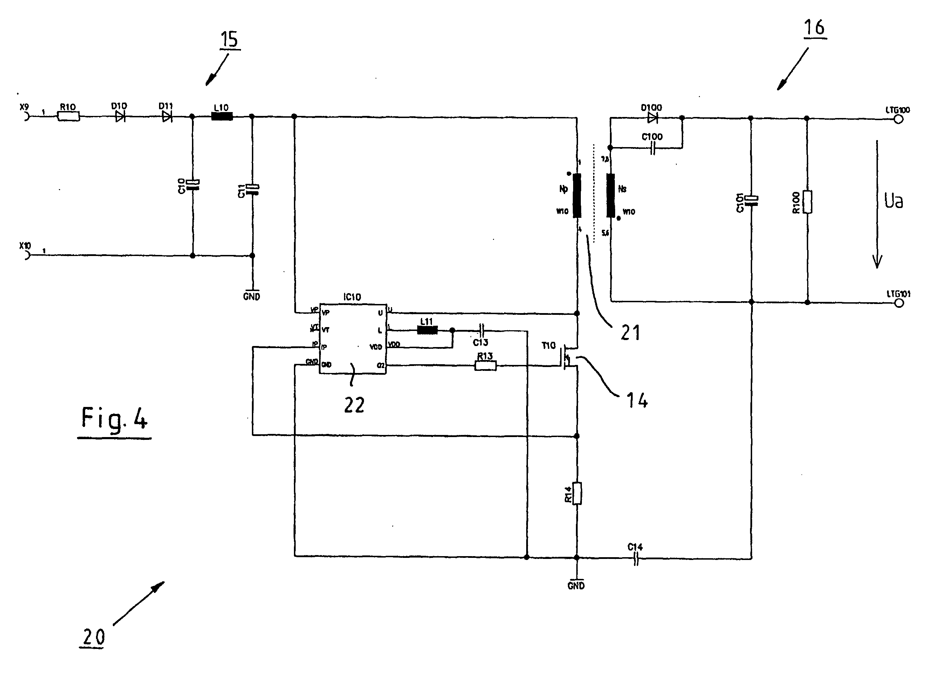

Figur 4 zeigt in einem weiteren Ausführungsbeispiel einen Stromlaufplan eines Schaltnetzteils 20, welches einen Transformator 21, einen Spannungsregler 22 und einen elektronischen Schalter 14 sowie weitere Schaltungskomponenten aufweist. Der Stromlaufplan entspricht weitestgehend der Ausführung gemäß Figur 3, wobei als Spannungsregler 22 ein Hochspannungs-IC eingesetzt wird und der Transformator 21 keine Hilfswicklung aufweist. An den Eingängen X9, X10 erfolgt der Anschluss der Netzwechselspannung, während an den Ausgängen LTG100 und LTG101 die Ausgangsspannung Ua anliegt, und zwar an dem Ausgang LTG100 das Pluspotential. Der Primärkreis 15 und der Sekundärkreis 16 sind identisch mit dem in Figur 3 gezeigten Schaltnetzteil. Eine Abweichung gegenüber diesem Stromlaufplan besteht darin, dass der Spannungsregler 22 mit seinem Eingang VP unmittelbar mit der Primärhauptwicklung Np verbunden ist, deren zweiter Anschluss einerseits mit dem elektronischen Schalter 14 und andererseits mit dem Eingang U des Spannungsreglers 22 unmittelbar verbunden ist. Der Eingang VT des Spannungsreglers 22 ist gegenüber der Schaltung gemäß Figur 3 unbeschaltet, während der Eingang Ip unmittelbar mit dem Ausgang des Feldeffekttransistor T10 verbunden ist.

Die Funktion der Spannungsregelung stellt sich wie folgt da. Der integrierte Schaltkreis IC10 schaltet den Ausgang G auf high, wodurch der Feldeffekttransistor T10 eingeschaltet wird. Hierdurch steigt der Strom durch die Wicklung Np des Wandlers W10 an, wobei derselbe Strom auch durch den Widerstand R14 fließt. Bei Erreichen der Abschaltschwelle an dem Anschluss IP des integrierten Schaltkreises IC10 wird Anschluss G auf low geschaltet und dadurch der Feldeffekttransistor T10 ausgeschaltet. Auf Grund der magnetischen Kopplung der drei Wicklungen des Transformators 2 werden in allen Wicklungen Spannungen induziert. Durch Nsek fließt zunächst ein Strom folgender Größe:

$$Isek = IP * Np / Nsek$$

Danach sinkt der Strom auf null ab. Währenddessen ist die Spannung an Nsek gleich der Summe der Spannungen an D100 und der Ausgangsspannung. Solange der Strom größer als null ist stehen die Spannungen an den Wicklungen im gleichen Verhältnis zueinander wie die Windungszahlen. Dies wird zur Reglung der Ausgangsspannung ausgenutzt. Dadurch, dass die magnetische Kopplung der Wicklungen zueinander nicht ideal ist, entsteht nach dem Abschalten von T10 zunächst ein Spannungsüberschwinger, bevor sich die Spannung an Nh auf die übertragene Spannung

$$U(Nh) = U(Nsek) * Nh / Nsek$$

einschwingt. Aus dem vorgenannten Grund darf deshalb nicht der Spitzenwert der Spannung an Nh zur Spannungsreglung an Nh ausgewertet werden. Die Auswertung darf erst erfolgen, wenn die Schwingungen abgeklungen sind. Im Weiteren ist der Spannungsabfall an D100 spannungsabhängig, wodurch die Spannung an Nh während des Stromflusses nicht konstant ist. Außerdem muss der Transistor oder Feldeffekttransistor T10 länger abgeschaltet werden als Strom durch Nsek fließt, so dass während eines Teils der Abschaltzeit keine Spannung mehr an Nh zur Verfügung steht, die von der Ausgangsspannung abhängig ist und ausgewertet werden kann. Um die vorstehenden Probleme zu lösen wird bei dem erfindungsgemäßen Regelungsprinzip jeweils in einem festen zeitlichen Abstand nach dem Abschalten von G bzw. G2 (Figur 3) die Spannung an U mit einem sample and hold Element gespeichert. Dadurch erhält man einen Messwert, der weitgehend unabhängig von der Kopplung der Wicklung ist, weil zum Messzeitpunkt die Schwingungen bereits abgeklungen sind. Außerdem ist sichergestellt, dass bei jeder Messung der Strom durch D100 gleich ist und somit auch die Spannung an D100 gleich ist. Überschreitet nun der Messwert den internen Referenzwert in IC10 wird in Abhängigkeit von der Höhe der Überschreitung die Zeit bis zum nächsten Einschalten von G bzw. G2 (Figur 3) eingestellt. Je größer die Überschreitung ist, desto länger die Abschaltdauer. In einem Bereich von 4 % der Referenzspannung variiert dabei die Abschaltdauer von 0 bis 10 ms, so dass bei geringer Belastung die Taktfrequenz auf minimale 100 Hertz zurückgeht und dabei die Ausgangsleistung auf einige mW absinkt. Eine Grundlast von wenigen mW im Gerät reicht demzufolge aus, um die Ausgangsspannung in einen Lastbereich von Nennlast (einige Watt) bis zum Leerlauf im Bereich von Unenn +/- 2 % zu halten. Nach Ablauf der Abschaltdauer wird G bzw. G2 wieder auf high gestellt, sofern die im Wandler gespeicherte Energie bereits vollständig zur Sekundärseite übertragen wurde, ansonsten wirkt die Stromreglung wie nachstehend beschrieben und ein neuer Zyklus beginnt.

Die Funktion der Stromreglung erfolgt dadurch, dass nach dem Abschalten von T10 das Ausgangssignal G bzw. G2 (Figur 3) mindestens solange ausgeschaltet bleibt, bis die Spannung am Anschluss U von IC10 auf < 0,1 Volt zurückgeht. Dadurch wird erreicht, dass die im Wandler gespeicherte Energie vollständig zur Sekundärseite übertragen wird. Wenn der Wandler W10 so aufgebaut ist, dass die Einschaltzeit von T10 bei Nennlast sehr viel kürzer ist als die Ausschaltzeit, ergibt sich daraus eine Ausgangsstrombegrenzung, die bei kleiner Ausgangsspannung, z. B. Kurzschluss, nur wenig größer ist als bei Nennausgangsspannung. Um die Steilheit der Strombegrenzung zu verbessern kann erfindungsgemäß dem Spannungsabfall an R14 eine Spannung überlagert werden, die proportional zum Verhältnis

$$(\text{Einschaltzeit (G)} + \text{Ausschaltzeit (G)}) / \text{Einschaltzeit (G)}$$

ist. Dieses Signal erzeugt IC10, es steht am Anschluss VT zur Verfügung.

Alternativ besteht die Möglichkeit das Signal auch aus dem Gatesignal, gemäß Figur 2, zu erzeugen, wenn die Spannung am eingeschalteten G konstant ist.

Eine weitere Möglichkeit gemäß Figur 3 die Strombegrenzung ausgangsspannungunabhängig zu realisieren besteht darin, das T10 nicht direkt durch das Ausgangssignal G des Spannungsreglers 14 angesteuert wird, sondern durch ein Ausgangssignal G2, welches gegenüber G soweit verkürzt ist, dass das Tastverhältnis dsek des Sekundärstroms konstant wird. Dadurch wird der mittlere Ausgangsstrom proportional zum Primärpeakstrom Ip. Bei konstantem Abschaltstrom Ip ist ferner der Ausgangsstrom la konstant.

$$Ia = Ip * Np/Ns/2 * dsek$$

Np= Primärwindungszahl
Ns= Sekundärwindungszahl

Da die Netzwechselspannung stark variiert, insbesondere bei Geräten, die in verschiedenen Ländern, wie z. B. in den USA mit 110 Volt und in Europa mit 230 Volt betrieben werden können, ist die Anstiegsgeschwindigkeit des Stroms in Np nicht konstant. Auf Grund der Verzögerungszeit zwischen Überschreiten der Referenz an IP und Abschaltung von T10 kommt es bei unterschiedlichen Eingangsspannungen zu verschiedenen Abschaltströmen, wenn eine konstante Referenz benutzt wird. Um dies zu verhindern wird erfindungsgemäß eine Referenz benutzt, die nach folgender Formel ansteigt:

$$\text{Referenzspannung }(t_{ein}) = \text{Abschaltschwelle} / (1 + \text{Abschaltverzögerungszeit}/(t_{ein}).$$

Hierdurch wird erreicht, dass der Abschaltstrom nahezu eingangsspannungsunabhängig ist und die erfindungsgemäßen Vorteile entstehen.

Der in Figur 4 gezeigte Stromlaufplan eines Schaltnetzteils 20 verzichtet auf eine Hilfswicklung, sodass ein als Hochspannungs-IC verwendeter Spannungsregler 22 mit dem Eingang VP mit der Betriebsspannung versorgt wird und als zweiter Messpunkt die Spannung der Primärhauptwicklung Np an U anliegt. Das Regelprinzip ist identisch mit den weiteren Schaltreglern, lediglich die Spannung an R wird durch die Spannung Np ersetzt.

**Bezugszeichenliste**

| | |
|---|---|
| 1 | Schaltnetzteil |
| 2 | Transformator |
| 3 | Spannungsregler |
| 4 | elektronischer Schalter |
| 5 | Primärkreis |
| 6 | Sekundärkreis |
| 11 | Schaltnetzteil |
| 12 | Transformator |
| 13 | Spannungsregler |
| 14 | elektronischer Schalter |
| 15 | Primärkreis |
| 16 | Sekundärkreis |
| 20 | Schaltnetzteil |
| 21 | Transformator |
| 22 | Spannungsregler |
| C10 | Glättungskondensator |
| C11 | Glättungskondensator |
| C13 | Kondensator |
| C14 | Kondensator |
| C15 | Kondensator |
| C100 | Kondensator |
| C101 | Kondensator |
| D10 | Diode |
| D11 | Diode |
| D12 | Diode |
| D100 | Diode |
| IC10 | Schaltkreis |
| IP | Strom in W10 |
| L10 | Spule |
| L11 | Induktivität |
| LTG100 | Ausgang |
| LTG101 | Ausgang |
| Nh | Hilfswicklung |
| Np | Wicklung (primär) |
| Ns | Wicklung (sekundär) |
| R10 | Vorwiderstand |
| R11 | Widerstand |
| R12 | Widerstand |
| R13 | Vorwiderstand |
| R14 | Widerstand |
| R15 | Widerstand |
| R16 | Widerstand |
| R17 | Widerstand |
| R18 | Widerstand |
| R100 | Widerstand |
| T10 | Feldeffekttransistor |
| u | Referenzspannung |
| W10 | Wandler |
| X9 | Eingang |
| X10 | Eingang |

**Patentansprüche**

1. Verfahren zur Regelung des Ausgangsstromes und/oder der Ausgangsspannung eines primär getakteten Schaltnetzteils mit einem Transformator (2,12,21) und einem Spannungsregler (3,13,22), in welchem durch die über eine Verbindung einer Wicklung (Nh, Np) des Transformators (2, 12, 21) mit dem Eingang (U) des Spannungsreglers (3, 13, 22) entnommene Spannung die im Transformator (2, 12, 21) gespeicherte Energie gemessen und die Spannungsbeaufschlagungszeit des Primärkreises des Transformators (2, 12, 21) in einem Regelzyklus in Abhängigkeit eines Vergleiches des so ermittelten Messwertes der an der besagten Transformatorwicklung anliegenden Spannung mit einem internen Referenzwert des Spannungsreglers variiert wird.
**dadurch gekennzeichnet, dass**
eine Messung und Zwischenspeicherung der Spannung jeweils in einem festen zeitlichen Abstand nach Unterbrechung des Primärkreises durch Abschalten der Steuerleitung (G) eines elektronischen Schalters (4, 14) vom Spannungsregler (3) vorgenommen wird, wenn die Spannungsschwingungen in den Wicklungen abgeklungen sind.

2. Verfahren nach Anspruch 1,
**gekennzeichnet durch**
die Einstellung eines konstanten Tastverhältnisses des Sekundärstroms.

3. Verfahren nach Anspruch 2,
**dadurch gekennzeichnet,**
**dass** der elektronische Schalter (14) für den Primärstrom (15) durch den Spannungsregler (3, 13, 22) über einen Vorwiderstand (R13) durch ein Ausgangssignal (G2), welches gegenüber dem Ausgangssignal (G) verkürzt ist, angesteuert wird.

4. Verfahren nach Anspruch 1, 2 oder 3,
**dadurch gekennzeichnet,**
**dass** als Messwert die induzierte Spannung einer Hilfswicklung (Nh) des Transformators (2, 12, 21) verwendet wird oder dass ein Hochspannungs-IC für die Spannungsreglung eingesetzt wird und als Messwert die Spannung der Primärhauptwicklung (Np) des Transformators (2, 12, 21) verwendet wird.

5. Verfahren nach einem oder mehreren der Ansprüche 1 bis 4,
**dadurch gekennzeichnet,**
**dass** der Messwert zu einem festen einstellbaren Zeitpunkt nach Unterbrechung des Primärkreises (5) zwischengespeichert wird.

6. Verfahren nach einem der Ansprüche 1 bis 5,
**dadurch gekennzeichnet,**
**dass** der Messwert mit einem internen Referenzwert des Spannungsreglers (3, 13, 22) verglichen wird und in Abhängigkeit von der Höhe der Überschreitung durch den Referenzwert die Zeit zur erneuten Spannungsbeaufschlagung des Primärkreises (5) bestimmt wird.

7. Verfahren nach einem oder mehreren der Ansprüche 1 bis 6,
**dadurch gekennzeichnet,**
**dass** die erneute Spannungsbeaufschlagung des Primärkreises (5) bis zum Erreichen eines maximalen Stroms des Transformators (2, 12, 21) erfolgt.

8. Verfahren nach einem oder mehreren der Ansprüche 1 bis 7,
**dadurch gekennzeichnet,**
**dass** der Strom des Transformators (2, 12, 21) mit einem zeitabhängigen Referenzwert verglichen wird.

9. Verfahren nach Anspruch 8,
**dadurch gekennzeichnet,**
**dass** als Referenzwert der Wert

$$\text{Referenz } (t_{ein}) = \text{Abschaltschwelle}/(1 + \text{Abschaltverzögerungszeit}/\, t_{ein})$$

(für $t_{ein}$ > minimale Einschaltzeit)
verwendet wird.

10. Primär getaktetes Schaltnetzteil zur Ausübung des Verfahrens nach einem oder mehreren der Ansprüche 1 bis 9, mit einem Transformator (2, 12, 21) und einem Spannungsregler (3, 13, 22), in welchem über eine Verbindung einer Wicklung (Nh, Np) des Transformators (2, 12, 21) mit dem Eingang (U) des Spannungsreglers (3, 13, 22) entnommene Spannung die im Transformator (2, 12, 21) gespeicherte Energie gemessen und die Spannungsbeaufschlagungszeit des Primärkreises des Transformators (2, 12, 21) in einem Regelzyklus in Abhängigkeit eines Vergleichs des so ermittelten Messwerts der an der besagten Transformatorwicklung (Nh, Np) /anliegenden Spannung mit einem internen Referenzwert des Spannungsreglers variiert wird,
**dadurch gekennzeichnet,**
**dass** eine Messung und eine Zwischenspeicherung der Spannung jeweils in einem festen zeitlichen Abstand nach Unterbrechung des Primärkreises durch Abschalten der Steuerschaltung (G) eines elektronischen Schalters (4, 14) vom Spannungsregler (3) vorgenommen wird vorgenommen wird, wenn die Spannungsschwingungen in den Wicklungen (Nh, Np) abgeklungen sind.

11. Schaltnetzteil nach Anspruch 10,
**dadurch gekennzeichnet,**
**dass** der Spannungsregler (3, 13, 22) zur Versorgung der Steuerschaltung als Linear- oder Schaltregler eingesetzt ist, wobei der Spannungsregler (3, 13, 22) ein Hochspannungs-IC ist und als Messwert die Spannung der Primärhauptwicklung (Np) anliegt.

12. Schaltnetzteil nach Anspruch 10 oder 11,
**dadurch gekennzeichnet,**
**dass** der elektronische Schalter (4) für den Primärkreis (5) durch den Spannungsregler (3, 13, 22) über einen Vorwiderstand ansteuerbar ist.

13. Schaltnetzteil nach Anspruch 10, 11 oder 12,
**dadurch gekennzeichnet,**
**dass** der Messwert für die induzierte Spannung der Hilfswicklung (Nh) oder der Primärhauptwicklung (Np) zu einem festen, einstellbaren Zeitpunkt nach Unterbrechung des Primärkreises (5) speicherbar ist.

14. Schaltnetzteil nach einem oder mehrere der Ansprüche 10 bis 13,
**dadurch gekennzeichnet,**
**dass** die Spannungsbeaufschlagung des Primärkreises (5) in Abhängigkeit von der Höhe der Überschreitung des internen Referenzwert des Spannungsreglers (3, 13, 22) durch den Messwert erfolgt.

15. Schaltnetzteil nach Anspruch 13,
**dadurch gekennzeichnet,**
**dass** der Primärkreis (5) in Abhängigkeit der induzierten Spannung der Hilfswicklung (Nh) oder der Primärhauptwicklung (Np), vorzugsweise bei einem Wert von < 0,1 Volt, wiedereinschaltbar ist.

16. Schaltnetzteil nach einem oder mehreren der Ansprüche 10 bis 15,
**dadurch gekennzeichnet,**
**dass** die Ansteuerspannung für den Schalter (4) zusätzlich durch eine Spannung proportional zum Verhältnis

$$\frac{\text{Einschaltzeit} + \text{Ausschaltzeit}}{\text{Einschaltzeit}}$$

überlagert ist.

17. Schaltnetzteil nach einem oder mehreren der Ansprüche 10 bis 16,
**dadurch gekennzeichnet,**
**dass** die Ansteuerspannung für den elektronischen Schalter (4) zusätzlich durch eine Spannung des Gatesignals überlagert ist.

18. Schaltnetzteil nach einem oder mehreren der Ansprüche 10 bis 17,
**dadurch gekennzeichnet,**

**dass** die primäre Versorgungsspannung des Spannungsreglers (3, 13, 22) durch die gleichgerichtete, geregelte Primärspannung erfolgt und dass sekundär kein höheres Spannungspotential anliegt.

**Claims**

1. Method for regulating the output current and/or output voltage of a primary switched switching power supply with a transformer (2, 12, 21) and a voltage regulator (3, 13, 22) in which the energy stored in the transformer (2, 12, 21) is measured by the voltage tapped through a connection of a winding (Nh, Np) of the transformer (2, 12, 21) to the input (U) of the voltage regulator (3, 13, 22) and the activation time of the primary circuit of the transformer (2, 12, 21) is varied in a control cycle as a function of a comparison of the measured value thus obtained of the voltage present on the said transformer winding with an internal reference value of the voltage regulator,
**characterized in that**
each measurement and temporary storage of the voltage is performed by the voltage regulator (3) at a fixed time interval after the interruption of the primary circuit by disconnection of the control lead (G) of an electronic switch (4, 14) when the voltage oscillations in the windings have died away.

2. Method according to Claim 1,
**characterized by**
the setting of a constant make-to-break ratio of the secondary current.

3. Method according to Claim 2,
**characterized in that**
the electronic switch (14) for the primary current (15) is triggered by the voltage regulator (3, 13, 22) through a series resistor (R13) by an output signal (G2) which is shortened with respect to the output signal (G).

4. Method according to Claims 1, 2 or 3,
**characterized in that**
the induced voltage of an auxiliary winding (Nh) of the transformer (2, 12, 21) is used as measured value, or **in that** a high-voltage IC is used for the voltage regulation and the voltage of the primary main winding (Np) of the transformer (2, 12, 21) is used as measured value.

5. Method according to one or more of Claims 1 to 4,
**characterized in that**
the measured value is temporarily stored at a set point in time after interruption of the primary circuit (5).

6. Method according to any one of Claims 1 to 5,
**characterized in that**
the measured value is compared with an internal reference value of the voltage regulator (3, 13, 22) and the time to renewed activation of the primary circuit (5) is determined as a function of the amount by which the reference value exceeds.

7. Method according to one or more of Claims 1 to 6,
**characterized in that**
renewed activation of the primary circuit (5) is effected until a maximum current of the transformer (2, 12, 21) is reached.

8. Method according to one or more of Claims 1 to 7,
**characterized in that**
the current of the transformer (2, 12, 21) is compared with a time-dependent reference value.

9. Method according to Claim 8,
**characterized in that**
the value

$$\text{reference (ton)} = \text{break threshold}/(1 + \text{break time-lag}/\text{ton})$$

(where ton > minimum "on" time)
is used as reference value.

10. Primary switched switching power supply for carrying out the method according to one or more of Claims 1 to 9, with a transformer (2, 12, 21) and a voltage regulator (3, 13, 22) in which the energy stored in the transformer (2, 12, 21) is measured [by the] voltage tapped through a connection of a winding (Nh, Np) of the transformer (2, 12, 21) to the input (U) of the voltage regulator (3, 13, 22) and the activation time of the primary circuit of the transformer (2, 12, 21) is varied in a control cycle as a function of a comparison of the measured value thus obtained of the voltage present on the said transformer winding (Nh, Np) with an internal reference value of the voltage regulator, **characterized in that**
each measurement and temporary storage of the voltage is performed by the voltage regulator (3) at a fixed time interval after the interruption of the primary circuit by disconnection of the control lead (G) of an electronic switch (4, 14) when the voltage oscillations in the windings have died away.

11. Switching power supply according to Claim 10, **characterized in that**
the voltage regulator (3, 13, 22) for powering the control circuit is used as a linear or switching controller and is a high-voltage IC and the voltage of the primary main winding (Np) is connected as measured value.

12. Switching power supply according to Claim 10 or Claim 11, **characterized in that**
the electronic switch (4) for the primary circuit (5) can be triggered by the voltage regulator (3, 13, 22) through a series resistor.

13. Switching power supply according to Claims 10, 11 or 12, **characterized in that**
the measured value for the induced voltage of the auxiliary winding (Nh) or primary main winding (Np) is storable at a set point in time after interruption of the primary circuit (5).

14. Switching power supply according to one or more of Claims 10 to 13, **characterized in that**
activation of the primary circuit (5) is effected as a function of the amount by which the internal reference value of the voltage regulator (3, 13, 22) is exceeded by the measured value.

15. Switching power supply according to Claim 13, **characterized in that**
the primary circuit (5) can be restored as a function of the induced voltage of the auxiliary winding (Nh) or primary main winding (Np), preferably at a value of < 0.1 volt.

16. Switching power supply according to one or more of Claims 10 to 15, **characterized in that**
a voltage proportional to the ratio

$$\frac{\text{on time} + \text{off time}}{\text{on time}}$$

is additionally superimposed on the triggering voltage for the switch (4).

17. Switching power supply according to one or more of Claims 10 to 16, **characterized in that**
a voltage of the gate signal is additionally superimposed on the triggering voltage for the electronic switch (4).

18. Switching power supply according to one or more of Claims 10 to 17, **characterized in that**
the primary supply voltage of the voltage regulator (3, 13, 22) is realized by the rectified, regulated primary voltage and **in that** no higher voltage potential is present on the secondary side.

**Revendications**

1. Procédé de régulation du courant de sortie et/ou de la tension de sortie d'une alimentation à découpage primaire, comprenant un transformateur (2, 12, 21) et un régulateur (3, 13, 22) de tension, dans lequel on mesure l'énergie emmagasinée dans le transformateur (2, 12, 21) par la tension prélevée par l'intermédiaire d'une liaison d'un enroulement (Nh, Np) du transformateur (2, 12, 21) avec l'entrée (U) du régulateur (3, 13, 22) de tension et on fait varier la durée d'alimentation en tension du circuit primaire du transformateur (2, 12, 21) suivant un cycle de régulation en fonction d'une comparaison de la valeur de mesure ainsi déterminée de la tension s'appliquant audit enroulement de transformateur à une valeur de référence interne du régulateur de tension,
   **caractérisé en ce que**
   on effectue par le régulateur (3) de tension une mesure et une mémorisation intermédiaire de la tension, respectivement, dans un laps de temps fixe après interruption du circuit primaire en interrompant la ligne (G) de commande d'un commutateur (4, 14) électronique lorsque les oscillations de tension sont amorties dans les enroulements.

2. Procédé suivant la revendication 1,
   **caractérisé par**
   le réglage d'un rapport de cycle constant du courant secondaire.

3. Procédé suivant la revendication 2,
   **caractérisé en ce que**
   le commutateur (14) électronique pour le circuit (15) primaire est commandé par le régulateur (3, 13, 22) de tension par l'intermédiaire d'une résistance (R13) série par un signal (G2) de sortie qui est écourté par rapport à un signal (G) de sortie.

4. Procédé suivant la revendication 1, 2 ou 3,
   **caractérisé en ce que**
   l'on utilise comme valeur de mesure la tension induite d'un enroulement (Nh) auxiliaire du transformateur (2, 12, 21) ou **en ce que** l'on règle pour la régulation de la tension un Cl en haute tension et l'on utilise comme valeur de mesure la tension de l'enroulement (Np) principal primaire du transformateur (2, 12, 21).

5. Procédé suivant l'une ou plusieurs des revendications 1 à 4,
   **caractérisé en ce que**
   l'on mémorise intermédiairement la valeur de mesure à un instant fixe que l'on peut régler après interruption du circuit (5) primaire.

6. Procédé suivant l'une des revendications 1 à 5,
   **caractérisé en ce que**
   l'on compare la valeur de mesure à une valeur interne de référence du régulateur (3, 13, 22) de tension et on détermine, en fonction du niveau du dépassement par la valeur de référence, la durée de réalimentation en tension du circuit (5) primaire.

7. Procédé suivant l'une ou plusieurs des revendications 1 à 6,
   **caractérisé en ce que**
   l'on effectue la réalimentation en tension du circuit (5) primaire jusqu'à obtention d'un courant maximum du transformateur (2, 12, 21).

8. Procédé suivant l'une ou plusieurs des revendications 1 à 7,
   **caractérisé en ce que**
   l'on compare le courant du transformateur (2, 12, 21) à une valeur de référence qui dépend du temps.

9. Procédé suivant la revendication 8,
   **caractérisé en ce que**
   l'on utilise comme valeur de référence la valeur

référence ($t_{ein}$) = seuil de déconnexion / (1 + temps de retard de

déconnexion / $t_{ein}$) (pour $t_{ein}$ > durée minimum de connexion)

**10.** Alimentation à découpage primaire pour mettre en oeuvre le procédé suivant l'une ou plusieurs des revendications 1 à 9, comprenant un transformateur (2, 12, 21) et un régulateur (3, 13, 22) de tension, dans lequel l'énergie emmagasinée dans le transformateur (2, 12, 21) est mesurée par la tension prélevée par une liaison d'un enroulement (Nh, Np) avec l'entrée (U) du régulateur (3, 13, 22) de tension et la durée d'alimentation en tension du circuit primaire du transformateur (2, 12, 21) est réglée dans un cycle de régulation en fonction d'une comparaison entre la valeur de mesure ainsi déterminée de la tension appliquée audit enroulement (Nh, Np) du transformateur et une valeur interne de référence du régulateur de tension,

**caractérisée en ce qu'**une mesure et une mémorisation intermédiaire de la tension sont effectuées, respectivement, par le régulateur (3) de tension à un intervalle fixe dans le temps après interruption du circuit primaire par déconnexion du circuit (G) de commande d'un commutateur (4, 14) électronique lorsque les oscillations de tension sont amorties dans les enroulements (Nh, Np).

**11.** Alimentation à découpage suivant la revendication 10,
**caractérisée en ce que**
le régulateur (3, 13, 22) de tension est utilisé pour alimenter le circuit de commande sous la forme d'un régulateur linéaire ou de commutation, le régulateur (3, 13, 22) de tension étant un CI en haute tension et la tension de l'enroulement (Np) principal primaire étant appliquée comme valeur de mesure.

**12.** Alimentation à découpage suivant la revendication 10 ou 11,
**caractérisée en ce que**
le commutateur (4) électronique pour le circuit (5) primaire peut être commandé par le régulateur (3, 13, 22) de tension par une résistance série.

**13.** Alimentation à découpage suivant la revendication 10, 11 ou 12,
**caractérisée en ce**
la valeur de mesure de la tension induite de l'enroulement (Nh) auxiliaire ou de l'enroulement (Np) principal primaire peut être mémorisée à un instant fixe et réglable après interruption du circuit (5) primaire.

**14.** Alimentation à découpage suivant l'une ou plusieurs des revendications 10 à 13,
**caractérisée en ce que**
l'alimentation en tension du circuit (5) primaire s'effectue en fonction du niveau du dépassement de la valeur interne de référence du régulateur (3, 13, 22) de tension par la valeur de mesure.

**15.** Alimentation à découpage suivant la revendication 13,
**caractérisée en ce que** le circuit (5) primaire peut être reconnecté en fonction de la tension induite de l'enroulement (Nh) auxiliaire ou de l'enroulement (Np) principal primaire, de préférence pour une valeur inférieure à 0,1 volt.

**16.** Alimentation à découpage suivant l'une ou plusieurs des revendications 10 à 15,
**caractérisée en ce**
la tension de commande du commutateur (4) est superposée, en outre, à une tension proportionnelle au rapport

durée de connexion + durée de déconnexion / durée de connexion

**17.** Alimentation à découpage suivant l'une ou plusieurs des revendications 10 à 16,
**caractérisée en ce que**
la tension de commande du commutateur (4) électronique est superposée, en outre, à une tension du signal de grille.

**18.** Alimentation à découpage suivant l'une ou plusieurs des revendications 10 à 17,
**caractérisée en ce que**
la tension d'alimentation primaire du régulateur (3, 13, 22) de tension s'effectue par la tension primaire redressée et régulée et **en ce que**, du côté secondaire, il n'est pas appliqué de potentiel de tension plus haut.

Fig. 1

EP 1 146 630 B1

Fig. 2

EP 1 146 630 B1

Fig. 3

Fig. 4

EP 1 146 630 B1